# FASCICULE DE BREVET EUROPEEN

(11) **EP 2 366 845 B1**
(45) Date de publication et mention de la délivrance du brevet: **26.06.2013**
(21) Numéro de dépôt: 10188245.4
(22) Date de dépôt: 20.10.2010
(51) Int. Cl.: E04D 13/17, E04B 1/74, F24J 2/04, F24J 2/28

(54) **Procédé d'isolation thermique active et dispositif pour la mise en oeuvre du procédé**
Aktives Wärmedämmungsverfahren und Vorrichtung zur Umsetzung dieses Verfahrens
Active thermal insulation method and device for implementing said method

(30) Priorité: 21.10.2009 FR 0905047
(43) Date de publication de la demande: 21.09.2011
(73) Titulaire: Orion Financement, 75755 Paris Cedex 15 (FR)
(72) Inventeur: Thierry, Laurent, 09500, Mirepoix (FR)
(74) Mandataire: Cabinet BARRE LAFORGUE & associés

(56) Documents cités:
- DE-A1-102006 037 741
- FR-A- 2 421 344
- US-A- 3 633 659

## Description

L'invention concerne un procédé d'isolation thermique du volume habitable d'un bâtiment, et plus particulièrement un procédé d'isolation thermique active qui permette de limiter les déperditions d'énergie entre le volume habitable et le milieu extérieur. L'invention concerne également un dispositif pour la mise en oeuvre de ce procédé.

Les procédés d'isolation thermique actuels sont en général passifs et reposent sur l'interposition, entre un espace clos, tel que le volume habitable d'un bâtiment, à une première température et le milieu extérieur, à une seconde température, d'une couche de matériau isolant à forte résistance thermique. On sait que le flux thermique s'échappant d'un premier milieu en direction d'un second milieu est proportionnel à la différence de température entre les deux milieux et inversement proportionnel à la résistance thermique de la paroi qui les sépare. Ainsi, l'augmentation de la résistance thermique de la paroi séparant le volume habitable du milieu extérieur tend à réduire le flux thermique s'échappant du volume habitable. Cependant, on a pu constater qu'il existe une limite à l'économie d'énergie que ce type d'isolation permet de générer. En outre, malgré les progrès réalisés sur les matériaux isolants, les épaisseurs nécessaires pour réaliser une isolation thermique permettant de respecter les normes actuelles sont très importantes et entraînent des difficultés et des surcoûts de construction.

Dès lors, on a recherché à améliorer l'efficacité énergétique des constructions, comme par exemple dans la demande de brevet français FR 2 688 531, avec des systèmes visant à récupérer l'énergie perdue par conduction dans les parois entourant le volume habitable pour la réutiliser pour le chauffage de ce volume habitable. D'autres systèmes utilisent également des éléments actifs tels que des capteurs solaires, ou encore la capacité de la toiture à chauffer une certaine quantité d'air pour la réinjecter dans le volume habitable.

Néanmoins, de tels systèmes présentent certains inconvénients et ne sont pas toujours optimaux dans l'utilisation de l'énergie récupérée. Par exemple, l'air chaud récupéré et réinjecté dans le volume habitable peut contenir des gaz toxiques (air vicié issu de la VMC, composés organiques volatiles, etc.) si il est réinjecté directement dans le volume habitable, ou bien l'efficacité énergétique du système n'est pas optimale lorsqu'on utilise un échangeur de chaleur dont le rendement est faible.

Le document DE-10 2006 037 741 A décrit un procédé d'isolation ayant toutes les caractéristiques du préambule de la revendication 1 et un dispositif pour sa mise en oeuvre selon le préambule de la revendication 9.

L'invention vise donc à obtenir un procédé d'isolation thermique actif permettant de minimiser la déperdition de chaleur du volume habitable en hiver et d'améliorer le confort thermique en été, sans pour autant mettre en oeuvre de fortes épaisseurs d'isolant.

L'invention vise également à maximiser l'efficacité énergétique d'un bâtiment en mettant en oeuvre une isolation performante et en utilisant de manière optimale les dispositifs de récupération d'énergie connus.

L'invention vise également un dispositif d'isolation thermique qui soit facile à produire et installer, et qui présente un rapport coût / efficacité performant.

L'invention vise en outre un dispositif d'isolation thermique modulaire, évolutif, et dont les performances peuvent être surveillées afin d'en éviter la dégradation.

Pour ce faire, l'invention concerne un procédé, conforme à la revendication 1, d'isolation thermique active d'un espace clos, dit volume habitable, séparé d'un milieu extérieur par au moins une paroi comportant au moins une double cloison en matériau isolant formant une lame de gaz continue, ladite lame de gaz comportant une bouche d'admission permettant l'entrée d'un gaz utilisé comme fluide caloporteur et une bouche d'échappement du gaz, dans lequel: :
- on agence la paroi de manière à superposer une première couche de matériau isolant, dite isolant principal, en regard du volume habitable, la lame de gaz et une seconde couche de matériau isolant, dit isolant secondaire, en regard du milieu extérieur,
- on utilise des moyens, dits moyens de conditionnement, adaptés pour modifier la température du gaz caloporteur,
- on commande la circulation du gaz dans la lame de gaz en fonction de la température du gaz de manière à obtenir un écart de température entre une température, dite température intérieure, de l'air régnant dans le volume habitable et la température du gaz dans de la lame de gaz permettant de minimiser un flux thermique défavorable, dit flux de déperdition, entre le volume habitable et le milieu extérieur.

L'invention met ainsi en oeuvre, outre la résistance thermique de l'isolant, le deuxième terme de l'équation régissant les flux thermiques au travers d'une paroi, à savoir la différence de température. En faisant circuler dans une lame de gaz, interposée entre le milieu extérieur et le volume habitable, un gaz dont la température est contrôlée, on peut ainsi minimiser, voire annuler ou même inverser la différence de température entre le volume habitable et la lame de gaz, ce qui a pour effet immédiat de minimiser, voire annuler ou même inverser le flux thermique s'échappant du volume habitable ou y pénétrant. On constitue ainsi une barrière thermique isolant complètement le volume habitable du milieu extérieur. En outre, le volume de la lame de gaz étant très inférieur au volume habitable, la quantité d'énergie nécessaire pour porter ce volume de gaz à une température déterminée est réduit.

Selon l'invention, le procédé comprend en outre et conformément à la revendication 1 les étapes suivantes :
- on détermine un premier flux de déperdition, dit flux statique, représentatif d'un flux d'énergie traversant la paroi en l'absence de circulation de gaz dans la lame de gaz à partir de la température intérieure, de la température extérieure et d'une résistance thermique de la paroi constituée de la résistance thermique des couches de matériau isolant et de la résistance thermique de la lame de gaz,
- on détermine un second flux de déperdition, dit flux contrôlé, représentatif d'un flux d'énergie traversant l'isolant principal entre le volume habitable et la lame de gaz à partir de la température intérieure, de la température du gaz circulant dans la lame de gaz, et de la résistance thermique de l'isolant principal - on commande la circulation du gaz dans la lame de gaz lorsque le flux contrôlé est inférieur au flux statique.

Ainsi, en fonction de la température qu'il est possible d'obtenir pour le gaz circulant dans la lame de gaz, on détermine le mode de fonctionnement le plus économique entre un mode dans lequel la lame de gaz est statique et participe à la résistance thermique de l'ensemble de la paroi, et un mode dans lequel la circulation du gaz dans la lame de gaz permet d'établir une barrière thermique entre le volume habitable et le milieu extérieur.

Avantageusement et selon l'invention, on détermine un régime, dit régime d'hiver, dans lequel le flux de déperdition est principalement orienté du volume habitable vers le milieu extérieur, et on chauffe le gaz caloporteur de manière à minimiser le transfert de chaleur du volume habitable vers le milieu extérieur.

En faisant circuler dans la lame de gaz un gaz à une température égale ou supérieure à la température régnant dans le volume habitable, on annule les pertes thermiques dues au flux de déperdition s'échappant du volume habitable et on optimise ainsi la consommation d'énergie affectée au chauffage de ce volume.

Avantageusement et selon l'invention, on chauffe le gaz caloporteur avec des moyens de conditionnement à énergie solaire. En utilisant une énergie renouvelable, considéré comme « gratuite », pour chauffer le gaz caloporteur, le procédé selon l'invention maximise l'efficacité énergétique de l'ensemble du bâtiment.

Avantageusement et selon l'invention, on chauffe le gaz caloporteur au moyen d'un échange thermique avec de l'air extrait du volume habitable. Ainsi, l'importante quantité d'énergie véhiculée par l'air chaud extrait en hiver par la ventilation mécanique contrôlée (VMC) peut être récupérée pour réchauffer le gaz caloporteur, indépendamment ou en combinaison avec les moyens de conditionnement à énergie solaire.

Avantageusement et selon l'invention, le procédé comporte les étapes suivantes :
- on estime la température intérieure,
- on mesure la température du gaz circulant dans la lame de gaz au niveau de la bouche d'échappement du gaz,
- on mesure la température du milieu extérieur, et
- on commande la circulation du gaz dans la lame de gaz tant que la température du gaz en sortie de la lame de gaz est supérieure à une valeur déterminée en fonction des températures intérieure et extérieure et des résistances thermiques des couches de matériau isolant.

On peut ainsi réaliser simplement une régulation de la circulation du gaz dans la lame de gaz en fonction de la température du gaz en sortie de la lame de gaz et de la température extérieure, en prenant par approximation une température intérieure fixe de 20°C par exemple.

Avantageusement et selon l'invention, on mesure en outre la température du gaz en sortie des moyens de conditionnement et on commande la circulation du gaz lorsque cette température est supérieure à une température prédéterminée. Ainsi, lorsque la température du gaz en sortie des moyens de conditionnement est supérieure à la température intérieure régnant dans le volume habitable plus un écart représentatif de la perte thermique le long de la lame de gaz, il est possible de commander la circulation du gaz dans la lame de gaz.

Avantageusement et selon l'invention, on détermine un régime, dit régime d'été, dans lequel le flux de déperdition est principalement orienté du milieu extérieur vers le volume habitable, et on refroidit le gaz caloporteur de manière à minimiser le transfert de chaleur du milieu extérieur vers le volume habitable. De manière analogue au régime d'hiver, en faisant circuler dans la lame de gaz, un gaz à une température inférieure ou égale à la température régnant dans le volume habitable, on annule les apports thermiques dus au flux de chaleur (qui s'assimile en été à un flux de déperdition) pénétrant dans le volume habitable et on améliore le confort thermique tout en minimisant l'énergie consommée par la climatisation éventuelle de ce volume.

Avantageusement et selon l'invention, on refroidit le gaz caloporteur au moyen d'un échange thermique avec de l'air extrait du volume habitable. Ainsi, en particulier lorsque le volume habitable est climatisé, on peut récupérer l'énergie véhiculée par l'air extrait par la VMC afin de refroidir le gaz caloporteur.

Avantageusement la circulation du gaz caloporteur s'effectue par convection naturelle, par exemple lorsque la lame de gaz possède une inclinaison non nulle et que le gaz chaud est introduit en partie basse de la lame. Néanmoins, selon une autre variante, la circulation du gaz caloporteur s'effectue par convection forcée, lorsqu'il est nécessaire d'augmenter le débit de gaz dans la lame de gaz ou bien de le faire circuler dans un sens différent de celui qu'il adopterait en convection naturelle.

L'invention s'étend également à un dispositif selon la revendication 9 pour la mise en oeuvre du procédé d'isolation thermique active, ce dispositif comprenant en combinaison :
- un caisson chevronné constitué d'au moins deux chevrons s'étendant entre une panne faitière et une panne sablière, fixés sur un panneau de sous face en contact avec le volume habitable, et comportant entre chaque paire de chevrons une première couche de matériau isolant, dite isolant principal, en contact avec le panneau de sous face, une seconde couche de matériau isolant, dit isolant secondaire, en regard du milieu extérieur, lesdites couches délimitant entre elles et entre les chevrons une lame de gaz comportant une première ouverture, dite bouche d'admission, au voisinage de la panne sablière et une seconde ouverture, dite bouche d'échappement, au voisinage de la panne faitière,
- des moyens de conditionnement de gaz adaptés pour porter un gaz caloporteur à une température déterminée,
- des moyens de commande adaptés pour commander la circulation du gaz caloporteur dans la lame de gaz.

La réalisation du dispositif selon l'invention sous la forme d'un caisson chevronné permet de réaliser la lame de gaz en usine, permettant ainsi d'obtenir une étanchéité parfaite de celle-ci. De plus, le caisson chevronné peut être équipé des moyens de conditionnement et de commande et l'ensemble peut être testé en usine. De ce fait, la mise en oeuvre du dispositif, qui arrive tout monté sur le chantier, est facilitée.

Selon l'invention et conformément à la revendication 9, les moyens de conditionnement comportent un capteur solaire placé entre au moins une paire de chevrons du caisson chevronné, à l'extrémité de celui-ci reposant sur la panne sablière, communicant avec la lame de gaz par la bouche d'admission et adapté pour transformer une énergie solaire incidente en énergie thermique transférée au gaz caloporteur. Le capteur solaire est ainsi avantageusement placé en bas de pente pour permettre une circulation du gaz dans la lame de gaz par convection naturelle et effet cheminée.

Avantageusement et selon l'invention, le gaz caloporteur est de l'air et le capteur solaire comporte un boitier métallique à l'intérieur duquel une pluralité de plaques perforées forment un chemin de circulation d'air entre une entrée d'air, dite entrée d'air hiver, et une vanne de distribution coopérant avec la bouche d'admission de la lame d'air.

Avantageusement et selon l'invention, le capteur solaire comporte une seconde entrée d'air, dite entrée d'air été, adaptée pour prélever de l'air frais sous un débord de la toiture et communicant directement avec la vanne de distribution. De cette manière, la partie chauffante du capteur solaire peut être évitée en été.

Avantageusement et selon l'invention, la vanne de distribution comporte trois positions permettant respectivement de fermer la bouche d'admission de la lame de gaz, de mettre en communication la lame de gaz avec l'entrée d'air hiver ou de mettre en communication la lame de gaz avec l'entrée d'air été. Ainsi, lorsque la vanne de distribution est placée en position fermée, la lame de gaz devient une lame de gaz statique participant à la résistance thermique du caisson chevronné. En outre lorsqu'elle est dans la position faisant communiquer la lame de gaz avec l'entrée d'air été, elle permet d'évacuer l'air chaud produit par le capteur solaire sous les tuiles.

Avantageusement et selon l'invention, les moyens de conditionnement comportent un échangeur thermique alimenté par de l'air extrait du volume habitable et adapté pour conditionner de l'air prélevé dans le milieu extérieur. L'air extrait par la VMC passe ainsi dans un échangeur thermique pour, selon la saison, réchauffer ou refroidir l'air extérieur avant de le transférer en direction de la lame de gaz.

Avantageusement et selon l'invention, la sortie d'air conditionné par l'échangeur thermique est connectée aux entrées du capteur solaire par l'intermédiaire d'un clapet de distribution permettant de diriger l'air conditionné par l'échangeur thermique vers l'entrée d'air hiver ou l'entrée d'air été en fonction de la température déterminée recherchée pour le gaz caloporteur. De cette manière, en hiver, l'air froid extérieur est d'abord réchauffé dans l'échangeur thermique de la VMC avant d'être aiguillé vers l'entrée d'air hiver pour être encore chauffé sous l'effet du capteur solaire. En été, l'air extérieur rafraîchi par le passage dans l'échangeur thermique de la VMC est acheminé directement vers l'entrée d'air été pour être injecté dans la lame de gaz.

Avantageusement et selon l'invention, les moyens de conditionnement comprennent des résistances électriques disposées à l'intérieur de la lame de gaz et alimentées par au moins un panneau solaire photovoltaïque solidaire du caisson chevronné. Dans cette version du dispositif selon l'invention, le caisson chevronné est recouvert au moins partiellement par un ou plusieurs panneaux solaires photovoltaïques qui permettent de générer de l'électricité solaire alimentant des résistances électriques placées dans la lame de gaz afin d'élever ou de maintenir la température de celle-ci. Bien entendu, l'électricité ainsi générée peut également être utilisée, de manière habituelle, en conjonction avec un dispositif permettant de la redistribuer sur le réseau électrique.

Des caissons chevronnés ainsi équipés permettent en outre de poser en une seule fois l'ensemble de la toiture, de la sous face en regard du volume habitable aux panneaux solaires formant la couverture du bâtiment.

Avantageusement les résistances électriques sont formées par des couches de matériau résistif déposées sur les parois de la lame de gaz.

Avantageusement et selon l'invention, la lame de gaz et/ou les moyens de conditionnement comportent un matériau à changement de phase encapsulé, adapté pour stocker l'énergie thermique transférée au gaz et la restituer ultérieurement. En disposant dans le capteur solaire et/ou sur les parois de la lame de gaz des capsules de matériau à changement de phase, on profite de leur capacité à emmagasiner de l'énergie pour compenser des variations de température du gaz liées aux fluctuations d'ensoleillement par exemple.

Avantageusement les moyens de commande sont actionnés de manière autonome par des actionneurs sensibles à la température. Par exemple, les vannes de distribution, les clapets et autres organes de commande peuvent être équipés de capsules de paraffine dont la variation de volume en fonction de la température permet d'assurer une commande de position de ces organes. D'autres solutions, comme l'utilisation de matériaux à mémoire de forme peuvent être également utilisées. Dès lors, ces organes peuvent être pilotés en fonction de la température qui les environne et le dispositif selon l'invention peut être complètement autonome.

Avantageusement les moyens de conditionnement et/ou la lame de gaz comportent au moins une sonde de température reliée à un boitier électronique et en ce que les moyens de commande sont actionnés électriquement par ledit boitier. Dans ce cas, des stratégies de commande, éventuellement complexes, peuvent être appliquées. En outre, le boîtier électronique peut élaborer et transmettre des informations de surveillance du dispositif.

Avantageusement et selon l'invention, la lame de gaz est constituée d'au moins une couche de lattes creuses, de section droite rectangulaire, en matière synthétique, disposées parallèlement aux chevrons. Ce mode de réalisation de la lame de gaz est particulièrement avantageux car il permet d'assurer l'étanchéité périphérique de cette lame de gaz et, le cas échéant, de métalliser l'intérieur des lattes pour les rendre peu émissives. En outre, lorsque deux couches de lattes sont utilisées, la lame de gaz ainsi réalisée est scindée en deux parties superposées permettant ainsi à la lame d'air la plus proche du volume habitable de conserver plus longtemps sa température.

D'autres buts, caractéristiques et avantages de l'invention apparaîtront au vu de la description qui va suivre et des dessins annexés dans lesquels :
- la figure 1 représente une coupe partielle, orthogonale à l'axe des pannes de la toiture d'un bâtiment utilisant un dispositif d'isolation thermique selon l'invention ;
- la figure 2 est une coupe longitudinale partielle d'un premier exemple du dispositif d'isolation thermique de l'invention ;
- la figure 3 est une coupe longitudinale partielle d'un deuxième exemple du dispositif d'isolation thermique de l'invention ;
- la figure 4 est une coupe longitudinale partielle d'un troisième exemple du dispositif d'isolation thermique de l'invention ;
- la figure 5 est une coupe transversale d'un exemple de réalisation de la lame de gaz du dispositif d'isolation thermique de l'invention.

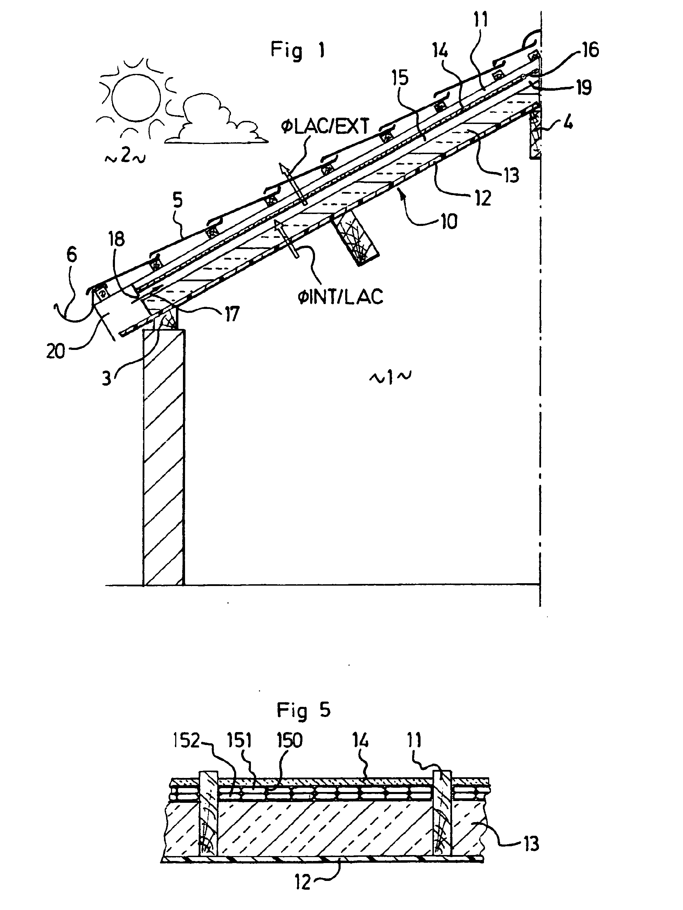

On a représenté à la figure 1 une coupe partielle d'un bâtiment dans lequel un espace intérieur ou volume habitable 1 est séparé d'un milieu extérieur 2, au niveau de la toiture, par un caisson chevronné 10 en appui sur des pannes entre une panne faîtière 4 et une panne sablière 3.

Bien entendu, le procédé et le dispositif de l'invention ne sont pas limités à des bâtiments d'habitation mais peuvent être utilisés dans tous types de bâtiments (bâtiments agricoles, hangars, bureaux, etc.) et plus généralement tout type de structure pour laquelle il serait utile de maitriser la déperdition thermique au travers des parois. De même, le procédé et le dispositif de l'invention qui sont décrits dans la suite du texte en référence à une toiture peuvent être appliqués à tous types de parois (murs, planchers, etc.)

Le caisson chevronné 10 est constitué d'une plaque de sous face de 12 sur laquelle sont fixés des chevrons 11, entre lesquels la plaque de sous face 12 est recouverte d'une première couche d'isolant, dit isolant principal 13. Le caisson isolant 10 comporte également une seconde couche d'isolant, dit isolant secondaire 14, s'étendant parallèlement à l'isolant principal à distance de ce dernier. L'espace compris entre l'isolant primaire 13 et l'isolant secondaire 14, entre deux chevrons 11, constitue une lame 15 de gaz qui s'étend sur toute la longueur du caisson chevronné depuis une bouche d'admission 18 jusqu'à une bouche d'échappement 19.

Le caisson chevronné 10 présente en outre à son extrémité inférieure, au voisinage de la panne sablière 3, des moyens 20 de conditionnement d'un gaz caloporteur 17 circulant dans la lame 15 de gaz.

Lorsqu'il existe une différence de température entre le volume habitable 1 et le milieu extérieur 2, un flux thermique traverse le caisson chevronné 10 du milieu le plus chaud vers le milieu le plus froid.

Afin de clarifier la description qui va suivre, nous considérerons dans un premier temps que la température à l'intérieur du volume habitable 1 est supérieure à la température du milieu extérieur 2 comme c'est le cas généralement en hiver. Dès lors, un flux thermique considéré comme défavorable, puisqu'il entraîne une consommation d'énergie pour conserver la température du volume intérieur, traverse la toiture du bâtiment du volume habitable vers le milieu extérieur.

Ce flux thermique peut être décomposé en un premier flux Φ _{INT/LAC} traversant l'isolant principal 13 depuis le volume habitable 1 jusqu'à la lame 15 de gaz suivi d'un deuxième flux thermique Φ_{LAC/EXT} traversant l'isolant secondaire 14 depuis la lame 15 de gaz jusqu'au milieu extérieur 2.

Le premier flux thermique Φ_{INT/LAC} représente la déperdition de chaleur qui se produit dans le volume habitable 1. Il est égal au quotient de la différence de température entre la température régnant dans la lame 15 de gaz et la température de l'air dans le volume habitable 1 par la résistance thermique de l'isolant principal 13.

Dans le procédé de l'invention, la réduction de ce flux de déperdition ne s'opère pas seulement comme dans la technique antérieure connue, en augmentant la résistance thermique de l'isolant, mais surtout en réduisant la différence de température entre le volume habitable et la lame 15 de gaz.

Pour ce faire, on utilise un moyen 20 de conditionnement du gaz caloporteur 17 circulant dans la lame 15. En particulier, dans le cas considéré, le moyen 20 de conditionnement du gaz est adapté pour chauffer celui-ci jusqu'à une température de préférence égale ou supérieure à la température de l'air dans le volume habitable 1. Dès que la température du gaz dans la lame 15 atteint la température du volume habitable, le flux thermique Φ_{INT/LAC} s'échappant du volume habitable s'annule, et ce quel que soit la résistance thermique que de l'isolant séparant le volume habitable de la lame de gaz. Si la température du gaz dans la lame dépasse la température du volume habitable le flux thermique Φ _{INT/LAC} s'inverse et devient un flux thermique favorable.

Même si la température de gaz dans la lame 15 de gaz n'atteint pas la température du volume habitable, la différence de température étant réduite, le flux thermique Φ_{INT/LAC} est minimisé.

Un raisonnement similaire mais inversé s'applique lorsque, en été, le milieu le plus chaud est le milieu extérieur. Il s'agit alors de réduire le flux thermique défavorable qui vient réchauffer le volume habitable. En faisant circuler un gaz frais à l'intérieur de la lame 15 de gaz, la différence de température entre la lame 15 de gaz et le volume habitable 1 est réduite, permettant de minimiser le flux thermique défavorable.

Cependant, dès lors que la lame de gaz est balayée par un flux de gaz, elle ne contribue plus à la résistance thermique de l'ensemble du caisson chevronné. Il existe donc un point d'équilibre entre un flux thermique de déperdition de chaleur, dit flux statique, s'échappant du volume habitable sous l'effet de la différence de température entre le volume habitable et le milieu extérieur, au travers d'une résistance thermique constituée de la résistance thermique de l'isolant principal 13, de celle de l'isolant secondaire 14 et de la résistance thermique que présente une lame de gaz statique c'est-à-dire dans laquelle le gaz est immobile, ayant des caractéristiques dimensionnelles de la lame 15 de gaz, et le flux thermique de déperdition, dit flux contrôlé, qui s'échappe du volume intérieur sous l'effet de la différence de température entre le volume habitable et la lame de gaz. Ce point d'équilibre dépend naturellement des températures extérieure et intérieure, des qualités et épaisseurs d'isolant employées pour la réalisation des isolants principal 13 et secondaire 14, de la géométrie de la lame de gaz et surtout de la température du gaz susceptible de circuler dans la lame de gaz que les moyens de conditionnement sont aptes à produire.

On détermine ainsi le flux statique à partir des températures extérieure et intérieure et des caractéristiques constructives du caisson chevronné 10 et on le compare au flux contrôlé qui dépend essentiellement de la température du gaz circulant dans la lame de gaz. Dès que, du fait de la baisse de la température du gaz dans la lame 15, le flux contrôlé devient supérieur au flux statique, on coupe la circulation du gaz, par exemple en fermant la bouche d'admission 18 de la lame 15 de gaz afin de rendre la lame de gaz statique et par conséquent minimiser la déperdition de chaleur.

Avantageusement, la bouche d'échappement 19 de la lame de gaz est équipée d'un clapet 16, par exemple à ressort ou capable de se refermer sous l'effet de son propre poids, qui referme la bouche d'échappement pour immobiliser complètement le gaz à l'intérieur de la lame 15.

Pour chauffer (respectivement rafraichir) le gaz caloporteur circulant dans la lame 15, l'invention prévoit des moyens 20 de conditionnement faisant principalement, sinon exclusivement appel à des énergies renouvelables dites « gratuites » telle que l'énergie solaire.

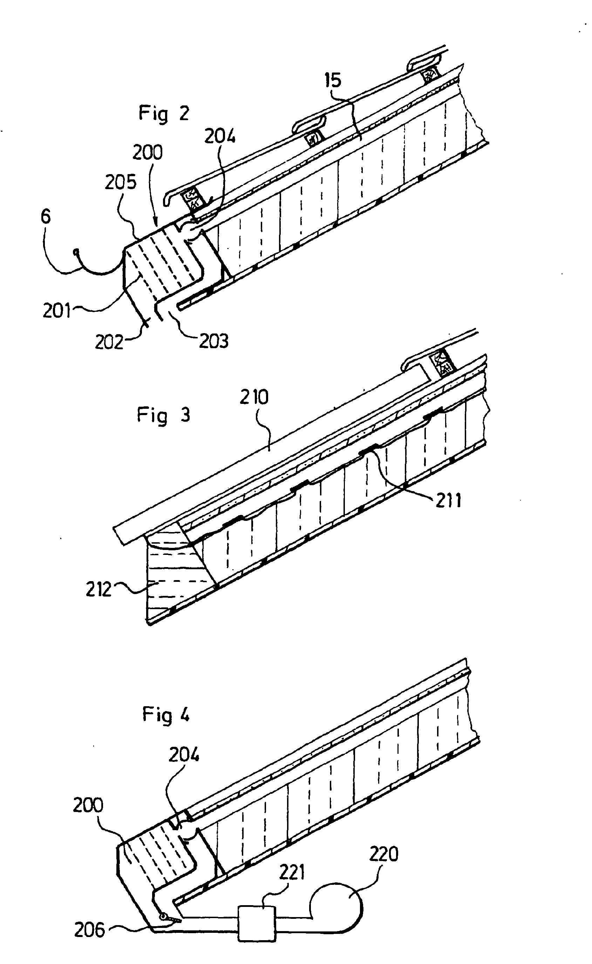

Dans l'exemple représenté à la figure 2, les moyens de conditionnement sont réalisés sous la forme d'un capteur solaire 200 à air, et le gaz caloporteur est avantageusement de l'air. Le capteur solaire 200 occupe la partie basse du caisson chevronné 10, au voisinage de la panne sablière et s'étend dans l'espace entre deux chevrons contigus. Le caisson chevronné 10 peut comprendre autant de capteurs solaires qu'il y a de travées entre chevrons ou bien un seul capteur par caisson chevronné, le capteur unique distribuant l'air chaud produit dans les travées non équipées au travers de tubes de connexion traversant les chevrons, ou encore un nombre intermédiaire quelconque de capteurs en fonction des besoins.

Le ou les capteurs solaires 200, de même que tous autres moyens 20 de conditionnement, sont préférentiellement montés en usine sur le caisson chevronné 10. Cependant, ils peuvent être, en option, montés ultérieurement sur un caisson chevronné déjà installé. Dans ce cas, l'emplacement du capteur solaire 200 est fermé par un bouchon 221 (fig. 3) de matériau isolant qui peut être retiré pour permettre le montage du capteur solaire 200.

Le capteur solaire 200 comporte un boîtier 205 réalisé en métal, par exemple en aluminium bon conducteur de chaleur, de préférence recouvert d'un revêtement sombre et mat tel qu'une anodisation de couleur noire afin d'absorber au mieux l'énergie solaire incidente et de la transformer en chaleur. A l'intérieur du boitier 205, une pluralité de plaques 201 perforées (ou une même plaque pliée en accordéon), elles aussi en aluminium, sont reliées au boitier de manière à conduire la chaleur produite par le boitier, et forment un chemin de circulation pour de l'air prélevé à l'extérieur par un premier orifice formant une entrée d'air dite entrée d'air hiver 202. L'air entrant par l'entrée 202 s'échauffe au contact du boitier et des plaques et ressort en regard de la bouche d'admission de la lame 15 par une vanne 204 de distribution. Une seconde entrée d'air, dite entrée d'air été 203, isolée de l'entrée d'air hiver 202, est ménagée en partie basse du capteur solaire 200 et communique directement avec la vanne 204.

Avantageusement, une plaque supérieure solidaire des boitiers 205 et commune à tous les capteurs solaires d'un même caisson recouvre les chevrons 11 et constitue une couverture étanche permettant d'arrêter la couverture de tuiles 5 en amont des capteurs et de laisser la surface des capteurs solaires exposée au soleil. Les capteurs solaires peuvent également comporter des moyens d'accrochage d'une gouttière 6.

La vanne 204 de distribution coopère avec la bouche d'admission de la lame de gaz et comporte au moins trois positions. Dans une première position, la vanne 204 obture complètement la bouche d'admission de la lame de gaz afin de réaliser une lame de gaz statique. Dans une seconde position, la vanne 204 connecte l'entrée d'air d'hiver avec la lame de gaz de manière à faire entrer et circuler l'air réchauffé par le capteur solaire dans la lame de gaz. Dans une troisième position, la vanne 204 connecte l'entrée d'air d'été avec la lame de gaz, permettant ainsi à de l'air frais prélevé à l'ombre, sous le débord de toiture, d'être acheminé dans la lame de gaz. Dans cette dernière position, la vanne 204 peut également connecter l'entrée 202 avec une sortie d'air sous les tuiles de manière à évacuer le surplus d'air chaud.

Selon une variante des moyens de conditionnement du gaz, représentée à la figure 4, ceux-ci comportent un échangeur thermique 221, par exemple un échangeur thermique à double flux, dans lequel l'air extrait du volume habitable 1 par la ventilation mécanique contrôlée (VMC) 220 et de l'air extérieur destiné à être injecté dans la lame de gaz échangent leur énergie. On estime que l'air extrait du volume habitable représente une importante quantité d'énergie, de l'ordre de 10000 kWh par an pour une VMC rejetant 180 m³ d'air à 20°C par heure.

Dans l'exemple représenté à la figure 4, l'air rejeté par la VMC en hiver réchauffe l'air extérieur dans l'échangeur 221. L'air ainsi réchauffé est dirigé par une conduite de sortie de l'échangeur vers les entrées du capteur solaire 200. Un volet de distribution 206 aiguille alors cet air réchauffé vers l'entrée d'air hiver 202 du capteur solaire 200 qui élève encore la température de cet air avant de l'injecter via la vanne 204 dans la lame 15 de gaz. Ainsi, les capacités de chauffage de l'échangeur 221 se cumulent avec celles du capteur solaire 200.

En été, l'air frais, voire même très frais si le volume habitable est équipé d'une climatisation, extrait par la VMC est envoyé à l'échangeur 221 qui peut ainsi rafraichir de l'air extérieur et l'amener à une température plus basse que celle à laquelle il a été prélevé. Le volet de distribution 206 est adapté pour aiguiller cet air frais vers l'entrée d'air été 203 du capteur solaire 200. L'air frais est ainsi directement admis via la vanne 204 correctement positionnée, dans la lame de gaz.

Les différents moyens de commande de la circulation de gaz dans la lame de gaz, comme par exemple la vanne 204, le volet 206 ou même le clapet 16 peuvent être actionnés de manière autonome par des actionneurs sensibles à la température. Par exemple ces moyens de commande peuvent être équipés de capsules de paraffine qui en variant de volume en fonction de la température peuvent actionner les moyens de commande et faire tourner la vanne 204, basculer le volet 206 et ouvrir et fermer le clapet 16. Les températures auxquelles ces moyens de commande doivent être actionnés peuvent être prédéterminées et un choix approprié des actionneurs ou de leur étalonnage peut être effectué sans difficulté par l'homme du métier.

En variante, ces moyens de commande peuvent être actionnés par des actionneurs électromécaniques comme par exemple des électroaimants ou des moteurs électriques. Pour pouvoir piloter ces moyens de commande, l'invention prévoit un boîtier électronique de commande (non représenté) adapté pour mettre en oeuvre des stratégies de commande en fonction d'information de température relevée par des sondes. Plusieurs sondes de température peuvent être ainsi disposées dans le dispositif de l'invention, en particulier à la sortie du capteur solaire 200 ou au niveau de la bouche d'admission 18 de la lame de gaz, réparties le long de la lame de gaz ou encore au niveau du clapet 16 de la bouche d'échappement 19. Les sondes de température peuvent être de tout type connu en soi (thermocouple, résistances CTN ou CTP, à semi-conducteur, etc.) Dans une disposition avantageuse, les sondes de température réparties le long de la lame de gaz peuvent être imprimées ou sérigraphiées sur l'une des faces internes de la lame de gaz. Bien entendu, d'autres sondes de température peuvent être utilisées, par exemple une sonde de température extérieure située sur la façade nord du bâtiment et une sonde de température intérieure située dans le volume habitable 1.

Au moyen de ces sondes et du boîtier électronique de commande il est possible de mesurer en permanence la performance thermique du dispositif, de vérifier le bon fonctionnement de chaque travée et de mettre en oeuvre diverses stratégies de commande de la circulation du gaz. Ainsi pour réaliser simplement une régulation de la circulation du gaz en fonction de la température du gaz en sortie de la lame 15 et de la température extérieure, on peut estimer la température intérieure par exemple à une valeur fixe de 20°C et comparer la température de sortie du gaz avec une température limite au-dessous de laquelle il est plus économique de couper la circulation de gaz pour revenir à un système classique d'isolation thermique comportant une lame d'air statique. On peut également estimer la température du gaz à partir de laquelle la plus grande partie de la lame 15 sera portée à une température supérieure à la température du volume habitable 1 en estimant la perte thermique le long de la lame 15. En ajoutant un écart de température représentatif de cette perte thermique à la température du volume habitable, on détermine une température à partir de laquelle il est utile de commander l'ouverture de la vanne 204 pour permettre la circulation du gaz dans la lame 15.

Afin de limiter la perte thermique le long de la lame 15, l'invention prévoit que les moyens de conditionnement comprennent également des résistances électriques 211 disposées à l'intérieur de la lame 15 de gaz. Ces résistances électriques sont avantageusement couplées à au moins un panneau solaire photovoltaïque 210 fixé sur le caisson chevronné 10.

Avantageusement encore, le ou les panneaux solaires photovoltaïques sont fixés sur le caisson chevronné en usine, formant ainsi une installation solaire photovoltaïque apte à être installée simultanément lors de l'installation de la toiture. En fonction de la surface des panneaux solaires, une installation classique, comportant des batteries et un onduleur permettant de redistribuer l'énergie électrique ainsi produite sur le réseau électrique, peut être prévue dans un local technique séparé et connectée à chaque caisson ainsi équipé.

Dans l'exemple illustré à la figure trois, seul un panneau photovoltaïque de taille réduite a été installé en bas de toiture et fournit directement ou par l'intermédiaire d'une batterie (non représentée) une énergie électrique propre à réchauffer le gaz à l'intérieur de la lame de gaz 15 par effet Joule au moyen de résistances électriques 211. Ces résistances électriques 211 sont avantageusement réalisées par dépôt ou par sérigraphie d'une couche d'un matériau résistif, sur la paroi supérieure de l'isolant principal 13 lors de la fabrication du caisson en usine. La répartition des résistances électriques 211 le long de la lame 15 s'effectue préférentiellement vers le haut du caisson au voisinage de la bouche d'échappement 19 afin de compenser les pertes thermiques se produisant dans la lame de gaz.

Selon une caractéristique avantageuse de l'invention, la lame 15 de gaz et/ou le capteur solaire 200 comportent un matériau à changement de phase, par exemple sous la forme de capsules de paraffine, capable de changer d'état en présence d'un apport suffisant d'énergie thermique, comme par exemple lorsque le soleil échauffe suffisamment le capteur solaire 200, et de restituer cette énergie lors de fluctuations d'ensoleillement ou pendant la nuit. En complément, il est également possible de placer des capsules de matériau à changement de phase dans les couches d'isolant entourant la lame de gaz.

Selon une autre caractéristique avantageuse de l'invention, la lame 15 de la gaze peut être réalisée au moyen de lattes 150 creuses, de section droite rectangulaire, disposées parallèlement aux chevrons 11. Une, ou mieux, plusieurs couches de lattes jointives, comme représenté à la figure 5, permettent de scinder la lame de gaz en plusieurs lames superposées. Cette disposition est particulièrement avantageuse en ce que la lame inférieure 152, au contact de l'isolant principal 13, est au moins partiellement protégée des pertes thermiques par la lame supérieure 151, et permet de réaliser de ce fait une surface isotherme sur une plus grande partie de la face supérieure de l'isolant principal 13, réduisant ainsi le flux de déperdition entre le volume habitable et la lame de gaz. Avantageusement encore, les lattes sont réalisées en matériau synthétique isolant et sont métallisées de manière à offrir une surface périphérique de la lame de gaz qui soit peu émissive et fortement réfléchissante.

Bien entendu, cette description est donnée à titre d'exemple illustratif uniquement et l'homme du métier pourra y apporter de nombreuses modifications sans sortir de la portée de l'invention telle que définie dans les revendications, comme par exemple utiliser des capteurs solaires de forme et de construction différente, par exemple en utilisant un isolant secondaire 14 sous la forme d'un film ou d'une couche de matériau absorbant l'énergie solaire, en association avec des tuiles 5 transparentes, afin de compenser les déperditions de température le long de la lame de gaz.

Il est également possible d'utiliser la chaleur produite en excès par les capteurs solaires, particulièrement en été, pour chauffer par exemple un ballon d'eau chaude et ainsi encore améliorer l'efficacité thermique globale du bâtiment.

## Revendications

1. Procédé d'isolation thermique active d'un espace clos, dit volume habitable (1), séparé d'un milieu extérieur (2) par au moins une paroi comportant au moins une double cloison en matériau isolant formant une lame (15) de gaz continue, ladite lame de gaz comportant une bouche d'admission (18) permettant l'entrée d'un gaz (17) utilisé comme fluide caloporteur et une bouche d'échappement (19) du gaz, procédé selon lequel :
- on agence la paroi de manière à superposer une première couche de matériau isolant, dite isolant principal (13), en regard du volume habitable, la lame (15) de gaz et une seconde couche de matériau isolant, dit isolant secondaire (14), en regard du milieu extérieur,
- on utilise des moyens, dits moyens (20) de conditionnement, adaptés pour modifier la température du gaz (17) caloporteur,
- on commande la circulation du gaz dans la lame de gaz en fonction de la température du gaz de manière à obtenir un écart de température entre une température, dite température intérieure, de l'air régnant dans le volume habitable et la température du gaz dans de la lame de gaz permettant de minimiser un flux thermique défavorable, dit flux de déperdition (Φ_{INT/LAC}), entre le volume habitable et le milieu extérieur.
**caractérisé en ce que**
- on détermine un premier flux de déperdition, dit flux statique, représentatif d'un flux d'énergie traversant la paroi en l'absence de circulation de gaz dans la lame de gaz à partir de la température intérieure, de la température extérieure et d'une résistance thermique de la paroi constituée de la résistance thermique des couches (13, 14) de matériau isolant et de la résistance thermique de la lame (15) de gaz,
- on détermine un second flux de déperdition, dit flux contrôlé, représentatif d'un flux d'énergie traversant l'isolant principal (13) entre le volume habitable (1) et la lame (15) de gaz à partir de la température intérieure, de la température du gaz circulant dans la lame de gaz, et de la résistance thermique de l'isolant principal
- on commande la circulation du gaz dans la lame de gaz lorsque le flux contrôlé est inférieur au flux statique.

2. Procédé selon la revendication 1, **caractérisé en ce que** l'on détermine un régime, dit régime d'hiver, dans lequel le flux de déperdition est principalement orienté du volume habitable vers le milieu extérieur, et on chauffe le gaz (17) caloporteur de manière à minimiser le transfert de chaleur du volume habitable vers le milieu extérieur.

3. Procédé selon la revendication 2, **caractérisé en ce qu'**on chauffe le gaz caloporteur avec des moyens (20, 200, 210) de conditionnement à énergie solaire.

4. Procédé selon la revendication 2, **caractérisé en ce que** l'on chauffe le gaz caloporteur au moyen d'un échange thermique (221) avec de l'air extrait du volume habitable.

5. Procédé selon l'une des revendications 2 à 4, **caractérisé en ce que**
- on estime la température intérieure,
- on mesure la température du gaz circulant dans la lame de gaz au niveau de la bouche d'échappement (19) du gaz,
- on mesure la température du milieu extérieur, et
- on commande la circulation du gaz dans la lame de gaz tant que la température du gaz en sortie de la lame de gaz est supérieure à une valeur déterminée en fonction des températures intérieure et extérieure et des résistances thermiques des couches de matériau isolant.

6. Procédé selon l'une des revendications 2 à 5, **caractérisé en ce qu'**on mesure en outre la température du gaz en sortie des moyens (20) de conditionnement et on commande la circulation du gaz lorsque cette température est supérieure à une température prédéterminée.

7. Procédé selon la revendication 1, **caractérisé en ce que** l'on détermine un régime, dit régime d'été, dans lequel le flux de déperdition est principalement orienté du milieu extérieur vers le volume habitable, et on refroidit le gaz caloporteur de manière à minimiser le transfert de chaleur du milieu extérieur vers le volume habitable.

8. Procédé selon la revendication 7, **caractérisé en ce que** l'on refroidit le gaz caloporteur au moyen d'un échange thermique (221) avec de l'air extrait du volume habitable.

9. Dispositif pour la mise en oeuvre du procédé d'isolation thermique active selon l'une quelconque des revendications précédentes, comprenant en combinaison :
- un caisson (10) chevronné constitué d'au moins deux chevrons (11) s'étendant entre une panne faitière (4) et une panne sablière (3), fixés sur un panneau (12) de sous face en contact avec un volume habitable (1), et comportant entre chaque paire de chevrons une première couche de matériau isolant, dite isolant principal (13), en contact avec le panneau de sous face, une seconde couche de matériau isolant, dite isolant secondaire (14), en regard d'un milieu extérieur (2), lesdites couches délimitant entre elles et entre les chevrons une lame (15) de gaz comportant une première ouverture, dite bouche d'admission (18), au voisinage de la panne sablière et une seconde ouverture, dite bouche d'échappement (19), au voisinage de la panne faitière,
- des moyens (20) de conditionnement de gaz adaptés pour porter un gaz (17) caloporteur à une température déterminée,
- des moyens de commande (204, 206, 16) adaptés pour commander la circulation du gaz caloporteur dans la lame de gaz,
**caractérisé en ce que** les moyens de conditionnement comportent un capteur solaire (200) placé entre au moins une paire de chevrons du caisson chevronné, à l'extrémité de celui-ci reposant sur la panne sablière, communicant avec la lame de gaz par la bouche d'admission et adapté pour transformer une énergie solaire incidente en énergie thermique transférée au gaz caloporteur.

10. Dispositif selon la revendication 9, **caractérisé en ce que** le gaz caloporteur est de l'air et **en ce que** le capteur solaire (200) comporte un boitier (205) métallique à l'intérieur duquel une pluralité de plaques (201) perforées forment un chemin de circulation d'air entre une entrée d'air, dite entrée d'air hiver (202) et une vanne (204) de distribution coopérant avec la bouche d'admission (18) de la lame d'air.

11. Dispositif selon la revendication 10, **caractérisé en ce que** le capteur solaire (200) comporte une seconde entrée d'air, dite entrée d'air été (203), adaptée pour prélever de l'air frais sous un débord de la toiture et communicant directement avec la vanne (204) de distribution et **en ce que** la vanne (204) de distribution comporte trois positions permettant respectivement de fermer la bouche d'admission de la lame de gaz, de mettre en communication la lame de gaz avec l'entrée d'air hiver ou de mettre en communication la lame de gaz avec l'entrée d'air été.

12. Dispositif selon l'une des revendications 9 à 11, **caractérisé en ce que** les moyens (20) de conditionnement comportent un échangeur (221) thermique alimenté par de l'air extrait du volume habitable et adapté pour conditionner de l'air prélevé dans le milieu extérieur.

13. Dispositif selon la revendication 12, **caractérisé en ce que** la sortie d'air conditionné par l'échangeur (221) thermique est connectée aux entrées (202, 203) du capteur solaire (200) par l'intermédiaire d'un volet (206) de distribution permettant de diriger l'air conditionné par l'échangeur thermique vers l'entrée d'air hiver (202) ou l'entrée d'air été (203) en fonction de la température déterminée recherchée pour le gaz caloporteur.

14. Dispositif selon l'une des revendications 9 à 13, **caractérisé en ce que** les moyens (20) de conditionnement comprennent des résistances électriques (211) disposées à l'intérieur de la lame (15) de gaz et alimentées par au moins un panneau (210) solaire photovoltaïque solidaire du caisson chevronné (10).

15. Dispositif selon l'une des revendications 9 à 14, **caractérisé en ce que** la lame de gaz et/ou les moyens de conditionnement comportent un matériau à changement de phase encapsulé, adapté pour stocker l'énergie thermique transférée au gaz et la restituer ultérieurement.

16. Dispositif selon l'une des revendications 11 à 15, **caractérisé en ce que** la lame de gaz est constituée d'au moins une couche de lattes (150) creuses, de section droite rectangulaire, en matière synthétique, disposées parallèlement aux chevrons (11).

## Patentansprüche

1. Verfahren zur aktiven thermischen Isolierung eines geschlossenen Raums, genannt Wohnvolumen (1) getrennt von einer äußeren Umgebung (2) durch mindestens eine Wand, umfassend mindestens eine doppelte Trennwand aus isolierendem Material, die einen durchgehenden Gasspalt (15) bildet, wobei der Gasspalt eine Einlassöffnung (18) umfasst, die den Eintritt eines Gases (17) ermöglicht, das als Wärmeträgerfluid verwendet wird, und eine Öffnung (19) zum Auslass des Gases, wobei gemäß dem Verfahren:
- die Wand derart angebracht wird, dass eine erste Schicht aus isolierendem Material, genannt Hauptisolierkörper (13), gerichtet hin zum Wohnvolumen, der Gasspalt (15) und eine zweite Schicht aus isolierendem Material, genannt sekundärer Isolierkörper (14) gerichtet hin zur äußeren Umgebung, aufeinander gelegt werden,
- Mittel, genannt Mittel (20) zur Klimatisierung, die ausgelegt sind, um die Temperatur des Wärmeträgergases (17) zu modifizieren, verwendet werden,
- die Zirkulierung des Gases im Gasspalt in Abhängigkeit von der Temperatur des Gases gesteuert wird, um eine Temperaturabweichung zwischen einer Temperatur, genannt Innentemperatur, der Luft, die im Wohnvolumen vorhanden ist, und der Temperatur des Gases im Gasspalt zu erhalten, die ermöglicht, einen nachteiligen thermischen Fluss, genannt Verlustfluss (Φ_{INT/LAC}) zwischen dem Wohnvolumen und der äußeren Umgebung zu minimieren,
**dadurch gekennzeichnet, dass**
- ein erster Verlustfluss, genannt statischer Fluss, bestimmt wird, der einen Energiefluss darstellt, der die Wand bei Abwesenheit der Gaszirkulation im Gasspalt durchquert, ausgehend von der Innentemperatur, der Außentemperatur und einer thermischen Resistenz der Wand, bestehend aus der thermischen Resistenz der Schichten (13, 14) aus isolierendem Material und der thermischen Resistenz des Gasspalts (15),
- ein zweiter Verlustfluss, genannt kontrollierter Fluss, bestimmt wird der einen Energiefluss darstellt, der den Hauptisolierkörper (13) zwischen dem Wohnvolumen (1) und dem Gasspalt (15) durchquert, ausgehend von der Innentemperatur, der Temperatur des Gases, das im Gasspalt zirkuliert, und der thermischen Resistenz des Hauptisolierkörpers,
- die Zirkulierung des Gases im Gasspalt gesteuert wird, wenn der kontrollierte Fluss geringer als der statische Fluss ist.

2. Verfahren nach Anspruch 1, **dadurch gekennzeichnet, dass** ein Zustand, genannt Winterzustand, bestimmt wird, in dem der Verlustfluss hauptsächlich vom Wohnvolumen zur äußeren Umgebung gerichtet ist, und das Wärmeträgergas (17) derart erwärmt wird, dass die Wärmeübertragung vom Wohnvolumen an die äußere Umgebung minimiert wird.

3. Verfahren nach Anspruch 2, **dadurch gekennzeichnet, dass** das Wärmeträgergas mit Mitteln (20, 200, 210) zur Klimatisierung mit Solarenergie erwärmt wird.

4. Verfahren nach Anspruch 2, **dadurch gekennzeichnet, dass** das Wärmeträgergas mit Hilfe eines Wärmetauschs (221) mit Luft, extrahiert aus dem Wohnvolumen, erwärmt wird.

5. Verfahren nach einem der Ansprüche 2 bis 4, **dadurch gekennzeichnet, dass**
- die Innentemperatur abgeschätzt wird,
- die Temperatur des Gases, das im Gasspalt auf der Ebene der Öffnung (19) zum Auslass des Gases (19) zirkuliert, gemessen wird,
- die Temperatur der äußeren Umgebung gemessen wird, und
- die Zirkulierung des Gases im Gasspalt gesteuert wird, sobald die Temperatur des Gases am Ausgang des Gasspalts höher als ein Wert ist, der in Abhängigkeit von der Innen- und der Außentemperatur und den thermischen Resistenzen der Schichten aus isolierendem Material bestimmt wird.

6. Verfahren nach einem der Ansprüche 2 bis 5, **dadurch gekennzeichnet, dass** außerdem die Temperatur des Gases am Ausgang der Mittel (20) zur Klimatisierung gemessen wird und die Zirkulierung des Gases gesteuert wird, wenn diese Temperatur höher als eine vorbestimmte Temperatur ist.

7. Verfahren nach Anspruch 1, **dadurch gekennzeichnet, dass** ein Zustand, genannt Sommerzustand, bestimmt wird, in dem der Verlustfluss hauptsächlich von der äußeren Umgebung hin zum Wohnvolumen gerichtet ist, und das Wärmeträgergas derart abgekühlt wird, dass die Wärmeübertragung von der äußeren Umgebung hin zum Wohnvolumen minimiert wird.

8. Verfahren nach Anspruch 7, **dadurch gekennzeichnet, dass** das Wärmeträgergas mit Hilfe eines Wärmetauschs (221) mit Luft, extrahiert aus dem Wohnvolumen, abgekühlt wird.

9. Vorrichtung zur Durchführung des Verfahrens zur aktiven thermischen Isolierung nach einem der vorhergehenden Ansprüche, umfassen, in Kombination:
- einen sparrentragenden Kasten (10), bestehend aus mindestens zwei Sparren (11), die sich zwischen einer Firstpfette (4) und einer Traufpfette (3) erstrecken, befestigt auf einer Platte (12) unter einer Fläche in Kontakt mit einem Wohnvolumen (1), und umfassend zwischen jedem Paar von Sparren eine erste Schicht aus isolierendem Material, genannt Hauptisolierkörper (13), in Kontakt mit der Platte unter einer Fläche, eine zweite Schicht aus isolierendem Material, genannt sekundärer Isiolierkörper (14), gegenüber einer äußeren Umgebung (2), wobei die Schichten zwischen sich und zwischen den Sparren einen Gasspalt (15) begrenzen, umfassend eine erste Öffnung, genannt Einlassöffnung (18), in der Nähe der Traufpfette, und eine zweite Öffnung, genannt Auslassöffnung (19), in der Nähe der Firstpfette,
- Mittel (20) zur Klimatisierung von Gas, ausgelegt, um einen Gaswärmeträger (17) auf eine bestimmte Temperatur zu bringen
- Steuerungsmittel (204, 206, 16), die ausgelegt sind, um die Zirkulierung des Wärmeträgergases im Gasspalt zu steuern,
**dadurch gekennzeichnet, dass** die Mittel zur Klimatisierung einen Sonnenkollektor (200) umfassen, der zwischen mindestens einem Paar Sparren des sparrentragenden Kastens (10) angeordnet ist, wobei das Ende dieses auf der Traufpfette liegt, mit dem Gasspalt durch die Einlassöffnung kommuniziert und ausgelegt ist, um auftreffende Solarenergie in thermische Energie, übertragen an das Wärmeträgergas, umzuwandeln.

10. Vorrichtung nach Anspruch 9, **dadurch gekennzeichnet, dass** das Wärmeträgergas Luft ist, und dadurch, dass der Sonnenkollektor (200) ein Metallgehäuse (205) umfasst, in dessen Innerem eine Vielzahl von perforierten Platten (201) einen Zirkulationsweg der Luft zwischen einem Lufteingang, genannt Winterlufteingang (202), und einem Verteilerventil (204) bildet, das mit der Einlassöffnung (18) des Luftspalts zusammenarbeitet.

11. Vorrichtung nach Anspruch 10, **dadurch gekennzeichnet, dass** der Sonnenkollektor (200) einen zweiten Luftreingang umfasst, genannt Sommerlufteingang (203) der ausgelegt ist, um frische Luft unter einer Dachtraufe zu entnehmen
und direkt mit dem Verteilerventil (204) kommuniziert, und dadurch, dass das Abgabeventil (204) drei Positionen umfasst, die jeweils ermöglichen, die Einlassöffnung des Gasspalts zu schließen, den Gasspalt mit dem Winterlufteingang in Verbindung zu setzen oder den Gasspalt mit dem Sommerlufteingang in Verbindung zu setzen.

12. Verfahren nach einem der Ansprüche 9 bis 11, **dadurch gekennzeichnet, dass** die Mittel (20) zur Klimatisierung einen Wärmetauscher (221) umfassen, der von der Luft, extrahiert aus dem Wohnvolumen, versorgt wird, und ausgelegt ist, um die in der äußeren Umgebung entnommene Luft zu klimatisieren.

13. Vorrichtung nach Anspruch 12, **dadurch gekennzeichnet, dass** der Ausgang von Luft, klimatisierter durch den Wärmetauscher (221),mit den Eingängen (202, 203) des Sonnenkollektors (200) mit Hilfe einer Verteilerklappe (206) verbunden ist und ermöglicht, die durch den Wärmetauscher klimatisierte Luft hin zum Winterlufteingang (202) oder zum Sommerlufteingang (203) zu richten, je nach der bestimmten Temperatur, die für das Wärmeträgergas festgestellt wird.

14. Verfahren nach einem der Ansprüche 9 bis 13, **dadurch gekennzeichnet, dass** die Mittel (20) zur Klimatisierung elektrische Resistenzen (211) umfassen, die im Inneren der Gasspalte (15) angeordnet sind und von mindestens einem photovoltaischen Sonnenpaneel (210) des sparrentragenden Kastens versorgt werden.

15. Verfahren nach einem der Ansprüche 9 bis 14, **dadurch gekennzeichnet, dass** der Gasspalt und/oder die Mittel zur Klimatisierung ein Material mit eingekapseltem Phasenübergang umfassen, dazu ausgelegt, um die thermische Energie zu speichern, die an das Gas übertragen wird und sie später wieder einzuspeisen.

16. Verfahren nach einem der Ansprüche 11 bis 15, **dadurch gekennzeichnet, dass** der Gasspalt aus mindestens einer Schicht aus hohlen Latten (150) mit einem geraden rechtwinkligen Querschnitt aus synthetischem Material besteht, das parallel zu den Sparren (11) angeordnet ist.

## Claims

1. Active thermal insulation method for a closed space, called the habitable volume (1), separated from an external environment (2) by at least one wall having at least one double partition made of insulating material forming a continuous gas gap (15), said gas gap having an inlet opening (18) permitting the entry of a gas (17) used as heat transfer medium and an outlet opening (19) for the gas, according to which method:
- the wall is arranged so as to superpose a first layer of insulating material, called the main insulant (13), facing the habitable volume, the gas gap (15) and a second layer of insulating material, called the secondary insulant (14), facing the external environment,
- means, called conditioning means (20), adapted to change the temperature of the heat transfer gas (17), are used,
- the circulation of the gas in the gas gap is controlled as a function of the temperature of the gas so as to obtain a temperature difference between a temperature, called the internal temperature, of the air prevailing in the habitable volume, and the temperature of the gas in the gas gap, making it possible to minimise an unfavourable heat flow, called the loss flow (Φ_{INT/LAC}) , between the habitable volume and the external environment, **characterised in that**
- a first loss flow, called the static flow, representing an energy flow passing through the wall in the absence of gas circulation in the gas gap is determined from the internal temperature, the external temperature and a heat resistance of the wall constituted by the heat resistance of the layers (13, 14) of insulating material and the heat resistance of the gas gap (15),
- a second loss flow, called the controlled flow, representing an energy flow passing through the main insulant (13) between the habitable volume (1) and the gas gap (15) is determined from the internal temperature, the temperature of the gas circulating in the gas gap, and the heat resistance of the main insulant,
- the circulation of the gas in the gas gap is controlled when the controlled flow is less than the static flow.

2. Method according to Claim 1, **characterised in that** a regime, called the winter regime, in which the loss flow is mainly oriented from the habitable volume towards the external environment, is determined, and the heat transfer gas (17) is heated so as to minimise the heat transfer from the habitable volume towards the external environment.

3. Method according to Claim 2, **characterised in that** the heat transfer gas is heated with solar energy conditioning means (20, 200, 210).

4. Method according to Claim 2, **characterised in that** the heat transfer gas is heated by means of a heat exchange (221) with air extracted from the habitable volume.

5. Method according to one of Claims 2 to 4, **characterised in that**
- the internal temperature is estimated,
- the temperature of the gas circulating in the gas gap is measured at the gas outlet opening (19),
- the temperature of the external environment is measured, and
- the circulation of the gas in the gas gap is controlled as long as the temperature of the gas at the outlet of the gas gap is greater than a value determined as a function of the internal and external temperatures and the heat resistances of the layers of insulating material.

6. Method according to one of Claims 2 to 5, **characterised in that** the temperature of the gas at the outlet of the conditioning means (20) is additionally measured and the circulation of the gas is controlled when this temperature is greater than a predetermined temperature.

7. Method according to Claim 1, **characterised in that** a regime, called the summer regime, in which the loss flow is mainly oriented from the external environment towards the habitable volume, is determined, and the heat transfer gas is cooled so as to minimise the heat transfer from the external environment towards the habitable volume.

8. Method according to Claim 7, **characterised in that** the heat transfer gas is cooled by means of a heat exchange (221) with air extracted from the habitable volume.

9. Device for carrying out the active thermal insulation method according to any one of the preceding claims, comprising in combination:
- a raftered caisson (10) formed by at least two rafters (11) extending between a ridge purlin (4) and an inferior purlin (3), which are fixed on an underside panel (12) in contact with a habitable volume (1), and having between each pair of rafters a first layer of insulating material, called the main insulant (13), in contact with the underside panel, a second layer of insulating material, called the secondary insulant (14), facing an external environment (2), said layers delimiting between them and between the rafters a gas gap (15) having a first opening, called the inlet opening (18), in the vicinity of the inferior purlin and a second opening, called the outlet opening (19), in the vicinity of the ridge purlin,
- gas conditioning means (20) adapted to bring a heat transfer gas (17) to a determined temperature,
- control means (204, 206, 16) adapted to control the circulation of the heat transfer gas in the gas gap, **characterised in that** the conditioning means have a solar collector (200) placed between at least one pair of rafters of the raftered caisson, at the end of the latter resting on the inferior purlin, communicating with the gas gap via the inlet opening and adapted to convert an incident solar energy into thermal energy transferred to the heat transfer gas.

10. Device according to Claim 9, **characterised in that** the heat transfer gas is air and **in that** the solar collector (200) has a metal housing (205), in the interior of which a plurality of perforated plates (201) form an air circulation path between an air inlet, called the winter air inlet (202), and a distribution valve (204) cooperating with the inlet opening (18) of the air gap.

11. Device according to Claim 10, **characterised in that** the solar collector (200) has a second air inlet, called the summer air inlet (203), adapted to draw cool air from under an overhang of the roof and communicating directly with the distribution valve (204) and **in that** the distribution valve (204) has three positions permitting respectively closure of the inlet opening of the gas gap, connection of the gas gap with the winter air inlet or connection of the gas gap with the summer air inlet.

12. Device according to one of Claims 9 to 11, **characterised in that** conditioning means (20) have a heat exchanger (221) supplied with air extracted from the habitable volume and adapted to condition air drawn from the external environment.

13. Device according to Claim 12, **characterised in that** the outlet for air conditioned by the heat exchanger (221) is connected to the inlets (202, 203) of the solar collector (200) via a distribution flap (206) permitting the air conditioned by the heat exchanger to be directed towards the winter air inlet (202) or the summer air inlet (203) as a function of the determined temperature sought for the heat transfer gas.

14. Device according to one of Claims 9 to 13, **characterised in that** the conditioning means (20) comprise electrical resistors (211) arranged in the interior of the gas gap (15) and supplied by at least one photovoltaic solar panel (210) secured to the raftered caisson (10).

15. Device according to one of Claims 9 to 14, **characterised in that** the gas gap and/or the conditioning means have an encapsulated phase change material, adapted to store the thermal energy transferred to the gas and to release it subsequently.

16. Device according to one of Claims 11 to 15, **characterised in that** the gas gap is formed by at least one layer of hollow laths (150), of rectangular cross-section, made of synthetic material, and arranged parallel to the rafters (11).
